(19) 

**Europäisches Patentamt**

**European Patent Office**

**Office européen des brevets**

(11) **EP 4 376 476 A1**

(12) **EUROPEAN PATENT APPLICATION**

(43) Date of publication:
**29.05.2024 Bulletin 2024/22**

(21) Application number: **23202674.0**

(22) Date of filing: **10.10.2023**

(51) International Patent Classification (IPC):
**H04W 24/10** (2009.01)  **H04W 24/02** (2009.01)

(52) Cooperative Patent Classification (CPC):
**H04W 24/10; H04W 24/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.11.2022 FI 20225984**

(71) Applicant: **Nokia Technologies Oy**
**02610 Espoo (FI)**

(72) Inventor: **MASRI, Ahmad**
**Tampere (FI)**

(74) Representative: **Nokia EPO representatives**
**Nokia Technologies Oy**
**Karakaari 7**
**02610 Espoo (FI)**

(54) **REDUCING RADIO SIGNAL MEASUREMENTS, AND RELATED DEVICES, METHODS AND COMPUTER PROGRAMS**

(57) Devices, methods and computer programs for reducing radio signal measurements are disclosed. At least some example embodiments may allow minimizing the amount of reported measurements, thereby saving significant amounts of radio resources that can be utilized for data communication, as well as saving energy at user equipment side.

FIG. 3

## Description

## TECHNICAL FIELD

The disclosure relates generally to communications and, more particularly but not exclusively, to reducing radio signal measurements, as well as related devices, methods and computer programs.

## BACKGROUND

In fifth generation (5G) wireless networks, mobility robustness optimization (MRO) algorithms may be utilized to optimize mobility parameters to improve mobility performance, e.g., to minimize mobility-related failures and unnecessary handovers.

Currently, 5G supports taking user terminal mobility related decisions based on reported measurements of different cells/beams as such. Reporting measurements consumes significant amounts of radio resources as well as energy at user equipment side, hence, optimizing the amount of reported measurements is of a high importance.

Therefore, at least in some situations, there may be a need for optimizing or reducing the amount of reported measurements.

## SUMMARY

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

An example embodiment of a client device comprises at least one processor and at least one memory storing instructions that, when executed by the at least one processor, cause the client device at least to perform receiving, from a network node device, a reduction indication for radio signal measurements indicating at least one reduction setting for radio signal measurements. The instructions, when executed by the at least one processor, further cause the client device at least to perform generating a set of reduced radio signal measurements based at least on the received at least one reduction setting for radio signal measurements. The instructions, when executed by the at least one processor, further cause the client device at least to perform transmitting, to the network node device, a reduced radio signal measurement report comprising the generated set of reduced radio signal measurements.

In an example embodiment, alternatively or in addition to the above-described example embodiments, the generating of the set of reduced radio signal measurements comprises applying a set of non-reduced radio signal measurements and the received at least one signal measurement reduction setting as input to a first machine learning, ML, model configured to predict the set of reduced radio signal measurements.

In an example embodiment, alternatively or in addition to the above-described example embodiments, the generating of the set of reduced radio signal measurements further comprises applying at least one of radio signal strength information or trajectory information as auxiliary input to the first ML model.

In an example embodiment, alternatively or in addition to the above-described example embodiments, the first ML model is further configured to predict at least one of mean values or variances of upcoming radio signal measurements based on the trajectory information, and the reduced radio signal measurement report further comprises the predicted at least one of mean values or variances of the upcoming radio signal measurements; or the instructions, when executed by the at least one processor, further cause the client device to perform calculating at least one of mean values or variances of the set of non-reduced radio signal measurements, and the reduced radio signal measurement report further comprises the calculated at least one of mean values or variances of the set of non-reduced radio signal measurements.

In an example embodiment, alternatively or in addition to the above-described example embodiments, the first ML model comprises an encoder part of an autoencoder.

In an example embodiment, alternatively or in addition to the above-described example embodiments, the generating of the set of reduced radio signal measurements comprises sampling a set of non-reduced radio signal measurements based on the received at least one signal measurement reduction setting, and the set of reduced radio signal measurements comprises results of the sampling.

In an example embodiment, alternatively or in addition to the above-described example embodiments, the instructions, when executed by the at least one processor, further cause the client device to perform calculating at least one of mean values or variances of the set of non-reduced radio signal measurements, and the reduced radio signal measurement report further comprises the calculated at least one of mean values or variances of the set of non-reduced radio signal measurements.

In an example embodiment, alternatively or in addition to the above-described example embodiments, the instructions, when executed by the at least one processor, further cause the client device to perform transmitting, to the network node device, a reduction request for radio signal measurements prior to the receiving of the signal measurement reduction indication.

In an example embodiment, alternatively or in addition to the above-described example embodiments, the at least one reduction setting for radio signal measurements comprises a sampling rate.

An example embodiment of a client device comprises means for causing the client device to receive, from a network node device, a reduction indication for radio signal measurements indicating at least one reduction setting for radio signal measurements. The means are further configured to cause the client device to generate a set of reduced radio signal measurements based at least on the received at least one reduction setting for radio signal measurements. The means are further configured to cause the client device to transmit, to the network node device, a reduced radio signal measurement report comprising the generated set of reduced radio signal measurements.

In an example embodiment, alternatively or in addition to the above-described example embodiments, the generating of the set of reduced radio signal measurements comprises applying a set of non-reduced radio signal measurements and the received at least one signal measurement reduction setting as input to a first machine learning, ML, model configured to predict the set of reduced radio signal measurements.

In an example embodiment, alternatively or in addition to the above-described example embodiments, the generating of the set of reduced radio signal measurements further comprises applying at least one of radio signal strength information or trajectory information as auxiliary input to the first ML model.

In an example embodiment, alternatively or in addition to the above-described example embodiments, the first ML model is further configured to predict at least one of mean values or variances of upcoming radio signal measurements based on the trajectory information, and the reduced radio signal measurement report further comprises the predicted at least one of mean values or variances of the upcoming radio signal measurements; or the means are further configured to cause the client device to calculate at least one of mean values or variances of the set of non-reduced radio signal measurements, and the reduced radio signal measurement report further comprises the calculated at least one of mean values or variances of the set of non-reduced radio signal measurements.

In an example embodiment, alternatively or in addition to the above-described example embodiments, the first ML model comprises an encoder part of an autoencoder.

In an example embodiment, alternatively or in addition to the above-described example embodiments, the generating of the set of reduced radio signal measurements comprises sampling a set of non-reduced radio signal measurements based on the received at least one signal measurement reduction setting, and the set of reduced radio signal measurements comprises results of the sampling.

In an example embodiment, alternatively or in addition to the above-described example embodiments, the means are further configured to cause the client device to calculate at least one of mean values or variances of the set of non-reduced radio signal measurements, and the reduced radio signal measurement report further comprises the calculated at least one of mean values or variances of the set of non-reduced radio signal measurements.

In an example embodiment, alternatively or in addition to the above-described example embodiments, the means are further configured to cause the client device to transmit, to the network node device, a reduction request for radio signal measurements prior to the receiving of the signal measurement reduction indication.

In an example embodiment, alternatively or in addition to the above-described example embodiments, the at least one reduction setting for radio signal measurements comprises a sampling rate.

An example embodiment of a method comprises receiving, at a client device from a network node device, a reduction indication for radio signal measurements indicating at least one reduction setting for radio signal measurements. The method further comprises generating, by the client device, a set of reduced radio signal measurements based at least on the received at least one reduction setting for radio signal measurements. The method further comprises transmitting, from the client device to the network node device, a reduced radio signal measurement report comprising the generated set of reduced radio signal measurements.

In an example embodiment, alternatively or in addition to the above-described example embodiments, the generating of the set of reduced radio signal measurements comprises applying a set of non-reduced radio signal measurements and the received at least one signal measurement reduction setting as input to a first machine learning, ML, model configured to predict the set of reduced radio signal measurements.

In an example embodiment, alternatively or in addition to the above-described example embodiments, the generating of the set of reduced radio signal measurements further comprises applying at least one of radio signal strength information or trajectory information as auxiliary input to the first ML model.

In an example embodiment, alternatively or in addition to the above-described example embodiments, the first ML model is further configured to predict at least one of mean values or variances of upcoming radio signal measurements based on the trajectory information, and the reduced radio signal measurement report further comprises the predicted at least one of mean values or variances of the upcoming radio signal measurements; or the method further comprises calculating, by the client device, at least one of mean values or variances of the set of non-reduced radio signal measurements, and the reduced radio signal measurement report further comprises the calculated at least one of mean values or variances of the set of non-reduced radio signal measurements.

In an example embodiment, alternatively or in addition to the above-described example embodiments, the first ML model comprises an encoder part of an autoencoder.

In an example embodiment, alternatively or in addition to the above-described example embodiments, the generating of the set of reduced radio signal measurements comprises sampling a set of non-reduced radio signal measurements based on the received at least one signal measurement reduction setting, and the set of reduced radio signal measurements comprises results of the sampling.

In an example embodiment, alternatively or in addition to the above-described example embodiments, the method further comprises calculating, by the client device, at least one of mean values or variances of the set of non-reduced radio signal measurements, and the reduced radio signal measurement report further comprises the calculated at least one of mean values or variances of the set of non-reduced radio signal measurements.

In an example embodiment, alternatively or in addition to the above-described example embodiments, the method further comprises transmitting, from the client device to the network node device, a reduction request for radio signal measurements prior to the receiving of the signal measurement reduction indication.

In an example embodiment, alternatively or in addition to the above-described example embodiments, the at least one reduction setting for radio signal measurements comprises a sampling rate.

An example embodiment of a computer program comprises instructions for causing a client device to perform at least the following: receiving, from a network node device, a reduction indication for radio signal measurements indicating at least one reduction setting for radio signal measurements. The instructions, when executed by the at least one processor, further cause the client device at least to perform generating a set of reduced radio signal measurements based at least on the received at least one reduction setting for radio signal measurements. The instructions, when executed by the at least one processor, further cause the client device at least to perform transmitting, to the network node device, a reduced radio signal measurement report comprising the generated set of reduced radio signal measurements.

An example embodiment of a network node device comprises at least one processor and at least one memory storing instructions that, when executed by the at least one processor, cause the network node device at least to perform transmitting, to a client device, a reduction indication for radio signal measurements indicating at least one reduction setting for radio signal measurements. The instructions, when executed by the at least one processor, further cause the network node device at least to perform receiving, from the client device, a reduced radio signal measurement report comprising a set of reduced radio signal measurements. The instructions, when executed by the at least one processor, further cause the network node device at least to perform reconstructing a set of non-reduced radio signal measurements based on the received set of reduced radio signal measurements.

In an example embodiment, alternatively or in addition to the above-described example embodiments, the reconstructing of the set of non-reduced radio signal measurements comprises applying the received set of reduced radio signal measurements as input to a second machine learning, ML, model configured to obtain the set of non-reduced radio signal measurements.

In an example embodiment, alternatively or in addition to the above-described example embodiments, the second ML model comprises a decoder part of an autoencoder.

In an example embodiment, alternatively or in addition to the above-described example embodiments, the reconstructing of the set of non-reduced radio signal measurements comprises interpolating the set of non-reduced radio signal measurements from the received set of reduced radio signal measurements.

In an example embodiment, alternatively or in addition to the above-described example embodiments, the received reduced radio signal measurement report further comprises at least one of mean values or variances of the set of non-reduced radio signal measurements, and the instructions, when executed by the at least one processor, further cause the network node device to perform the reconstructing of the set of non-reduced radio signal measurements further based on the received at least one of mean values or variances of the set of non-reduced radio signal measurements.

In an example embodiment, alternatively or in addition to the above-described example embodiments, the instructions, when executed by the at least one processor, further cause the network node device to perform receiving, from the client device, a reduction request for radio signal measurements prior to the transmitting of the reduction indication for radio signal measurements.

In an example embodiment, alternatively or in addition to the above-described example embodiments, the at least one reduction setting for radio signal measurements comprises a sampling rate.

An example embodiment of a network node device comprises means for causing the network node device to transmit, to a client device, a reduction indication for radio signal measurements indicating at least one reduction setting for radio signal measurements. The means are further configured to cause the network node device to receive, from the client device, a reduced radio signal measurement report comprising a set of reduced radio signal measurements. The means are further configured to cause the network node device to reconstruct a set of non-reduced radio signal measurements based on the received set of reduced radio signal measurements.

In an example embodiment, alternatively or in addition to the above-described example embodiments, the reconstructing of the set of non-reduced radio signal measurements comprises applying the received set of reduced radio signal measurements as input to a second machine learning, ML, model configured to obtain the set of non-reduced radio signal measurements.

In an example embodiment, alternatively or in addition to the above-described example embodiments, the second ML model comprises a decoder part of an autoencoder.

In an example embodiment, alternatively or in addition to the above-described example embodiments, the reconstructing of the set of non-reduced radio signal measurements comprises interpolating the set of non-reduced radio signal measurements from the received set of reduced radio signal measurements.

In an example embodiment, alternatively or in addition to the above-described example embodiments, the received reduced radio signal measurement report further comprises at least one of mean values or variances of the set of non-reduced radio signal measurements, and the means are further configured to cause the network node device to perform the reconstructing of the set of non-reduced radio signal measurements further based on the received at least one of mean values or variances of the set of non-reduced radio signal measurements.

In an example embodiment, alternatively or in addition to the above-described example embodiments, the means are further configured to cause the network node device to receive, from the client device, a reduction request for radio signal measurements prior to the transmitting of the reduction indication for radio signal measurements.

In an example embodiment, alternatively or in addition to the above-described example embodiments, the at least one reduction setting for radio signal measurements comprises a sampling rate.

An example embodiment of a method comprises transmitting, from a network node device to a client device, a reduction indication for radio signal measurements indicating at least one reduction setting for radio signal measurements. The method further comprises receiving, at the network node device from the client device, a reduced radio signal measurement report comprising a set of reduced radio signal measurements. The method further comprises reconstructing, by the network node device, a set of non-reduced radio signal measurements based on the received set of reduced radio signal measurements.

In an example embodiment, alternatively or in addition to the above-described example embodiments, the reconstructing of the set of non-reduced radio signal measurements comprises applying the received set of reduced radio signal measurements as input to a second machine learning, ML, model configured to obtain the set of non-reduced radio signal measurements.

In an example embodiment, alternatively or in addition to the above-described example embodiments, the second ML model comprises a decoder part of an autoencoder.

In an example embodiment, alternatively or in addition to the above-described example embodiments, the reconstructing of the set of non-reduced radio signal measurements comprises interpolating the set of non-reduced radio signal measurements from the received set of reduced radio signal measurements.

In an example embodiment, alternatively or in addition to the above-described example embodiments, the received reduced radio signal measurement report further comprises at least one of mean values or variances of the set of non-reduced radio signal measurements, and the method further comprises performing the reconstructing of the set of non-reduced radio signal measurements further based on the received at least one of mean values or variances of the set of non-reduced radio signal measurements.

In an example embodiment, alternatively or in addition to the above-described example embodiments, the method further comprises receiving, at the network node device from the client device, a reduction request for radio signal measurements prior to the transmitting of the reduction indication for radio signal measurements.

In an example embodiment, alternatively or in addition to the above-described example embodiments, the at least one reduction setting for radio signal measurements comprises a sampling rate.

An example embodiment of a computer program comprises instructions for causing a network node device to perform at least the following: transmitting, to a client device, a reduction indication for radio signal measurements indicating at least one reduction setting for radio signal measurements. The instructions, when executed by the at least one processor, further cause the network node device at least to perform receiving, from the client device, a reduced radio signal measurement report comprising a set of reduced radio signal measurements. The instructions, when executed by the at least one processor, further cause the network node device at least to perform reconstructing a set of non-reduced radio signal measurements based on the received set of reduced radio signal measurements.

## DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:

FIG. 1 shows an example embodiment of the subject matter described herein illustrating an example system, where various embodiments of the present disclosure may be implemented;

FIG. 2A shows an example embodiment of the subject matter described herein illustrating a client device;

FIG. 2B shows an example embodiment of the subject matter described herein illustrating a network node device;

FIG. 3 shows an example embodiment of the subject matter described herein illustrating a method;

FIG. 4 shows an example embodiment of the subject matter described herein illustrating ML -based future prediction measurement reduction;

FIG. 5 shows an example embodiment of the subject matter described herein illustrating ML -based autoencoder prediction measurement reduction;

FIG. 6 shows an example embodiment of the subject matter described herein illustrating rule -based measurement reduction;

FIG. 7 shows an example embodiment of the subject matter described herein illustrating an autoencoder; and

FIG. 8 shows an example embodiment of the subject matter described herein illustrating a sampling operation.

Like reference numerals are used to designate like parts in the accompanying drawings.

## DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

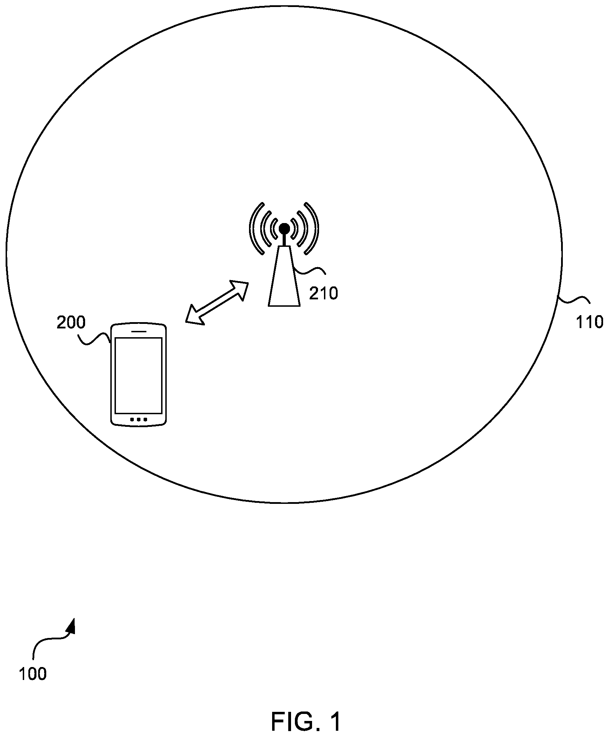

Fig. 1 illustrates an example system 100, where various embodiments of the present disclosure may be implemented. The system 100 may comprise a fifth generation (5G) new radio (NR) network or a network beyond 5G wireless networks, 110. An example representation of the system 100 is shown depicting a client device 200 and a network node device 210. At least in some embodiments, the network 110 may comprise one or more massive machine-to-machine (M2M) network(s), massive machine type communications (mMTC) network(s), internet of things (IoT) network(s), industrial internet-of-things (IIoT) network(s), enhanced mobile broadband (eMBB) network(s), ultra-reliable low-latency communication (URLLC) network(s), and/or the like. In other words, the network 110 may be configured to serve diverse service types and/or use cases, and it may logically be seen as comprising one or more networks.

The client device 200 may include, e.g., a mobile phone, a smartphone, a tablet computer, a smart watch, or any hand-held, portable and/or wearable device. The client device 200 may also be referred to as a user equipment (UE). The network node device 210 may comprise a base station. The base station may include, e.g., any device suitable for providing an air interface for client devices to connect to a wireless network via wireless transmissions.

In the following, various example embodiments will be discussed. At least some of these example embodiments described herein may allow reducing reported radio signal measurements.

At least some of the example embodiments described herein may allow minimizing or at least reducing the amount of reported radio signal measurements, thereby saving significant amounts of radio resources that can be utilized for data communication, as well as saving energy at client device side and thus increasing life expectancy of the client device. At least some of these example embodiments described herein may allow reducing reported radio signal measurements for LTM (layer 1 (L1) / layer 2 (L2) triggered mobility) in which periodic measurements of signal levels of beams may need to be reported to the network from the client device side.

At least some of the example embodiments described herein may allow reducing reported radio signal measurements related to collection of handover (HO) related key performance indicators (KPIs) for mobility robustness optimization (MRO) in cellular mobile communications.

At least some of the example embodiments described herein may allow using a machine learning (ML) -based approach to reduce the amount of reported radio signal measurements.

At least some of the example embodiments described herein may allow radio signal measurement reduction in which the client device 200 and the network node device 210 may work together to achieve the radio signal measurement reporting reduction. On the one hand, the client device 200 may reduce the amount of reported measurements by reporting a sampled (scarce) version of the original measured radio signals to the network node device 210 following indication and settings from the network node device 210, and on the other hand, the network node device 210 may reconstruct continuous versions of the radio signals using the sampled versions of the radio signals and optionally extra information provided from the client device 200 side, such as mean values and variances of the radio signals.

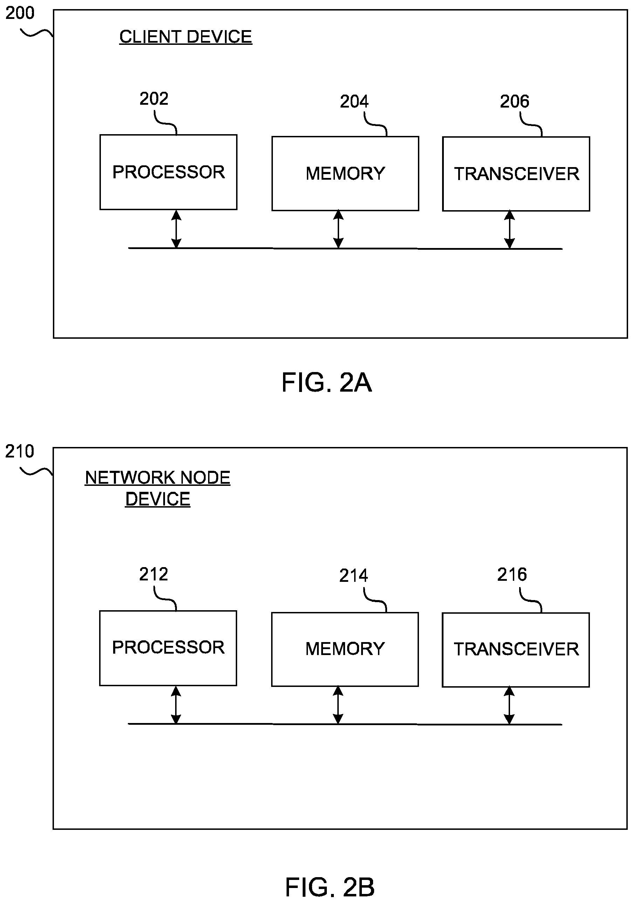

Fig. 2A is a block diagram of the client device 200, in accordance with an example embodiment.

The client device 200 comprises one or more processors 202 and one or more memories 204 that comprise computer program code. The client device 200 may also include other elements, such as a transceiver 206 configured to enable the client device 200 to transmit and/or receive information to/from other devices, as well as other elements not shown in Fig. 2A. In one example, the client device 200 may use the transceiver 206 to transmit or receive signaling information and data in accordance with at least one cellular communication protocol. The transceiver 206 may be configured to provide at least one wireless radio connection, such as for example a 3GPP mobile broadband connection (e.g., 5G or beyond). The transceiver 206 may comprise, or be configured to be coupled to, at least one antenna to transmit and/or receive radio frequency signals.

Although the client device 200 is depicted to include only one processor 202, the client device 200 may include more processors. In an embodiment, the memory 204 is capable of storing instructions, such as an operating system and/or various applications. Furthermore, the memory 204 may include a storage that may be used to store, e.g., at least some of the information and data used in the disclosed embodiments.

Furthermore, the processor 202 is capable of executing the stored instructions. In an embodiment, the processor 202 may be embodied as a multi-core processor, a single core processor, or a combination of one or more multi-core processors and one or more single core processors. For example, the processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, or the like. In an embodiment, the processor 202 may be configured to execute hard-coded functionality. In an embodiment, the processor 202 is embodied as an executor of software instructions, wherein the instructions may specifically configure the processor 202 to perform the algorithms and/or operations described herein when the instructions are executed.

The memory 204 may be embodied as one or more volatile memory devices, one or more non-volatile memory devices, and/or a combination of one or more volatile memory devices and non-volatile memory devices. For example, the memory 204 may be embodied as semiconductor memories (such as mask ROM, PROM (programmable ROM), EPROM (erasable PROM), flash ROM, RAM (random access memory), etc.).

The client device 200 may comprise any of various types of devices used directly by an end user entity and capable of communication in a wireless network, such as user equipment (UE). Such devices include but are not limited to smartphones, tablet computers, smart watches, lap top computers, internet-of-things (IoT) devices, massive machine-to-machine (M2M) devices, massive machine type communications (mMTC) devices, industrial internet-of-things (IIoT) devices, enhanced mobile broadband (eMBB) devices, ultra-reliable low-latency communication (URLLC) devices, and/or devices mounted in vehicles, etc.

When executed by the at least one processor 202, instructions stored in the at least one memory 204 cause the client device 200 at least to perform receiving, from a network node device 210, a reduction indication for radio signal measurements indicating at least one reduction setting for radio signal measurements. For example, the at least one reduction setting for radio signal measurements may comprise a sampling rate $R_s$.

For example, the sampling rate $R_s$ provided from the network node device 210 may conform to a Nyquist rate to allow retrieving information correctly from a sampled version, thus the sampling rate $R_s$ may comprise, e.g. :

$$R_s \leq 2W$$

in which **W** represents a maximum signal frequency. For example, the network node device 210 may determine the sampling rate from a history of reported measurements. Furthermore, given a waveform, the network node device 210 may find a shortest ripple (there may be at least two samples in the shortest ripple). The inverse of the length of the shortest ripple may approximate the highest frequency of the signal. Furthermore, the operating frequency may be known by the network node device 210 and used as a reference.

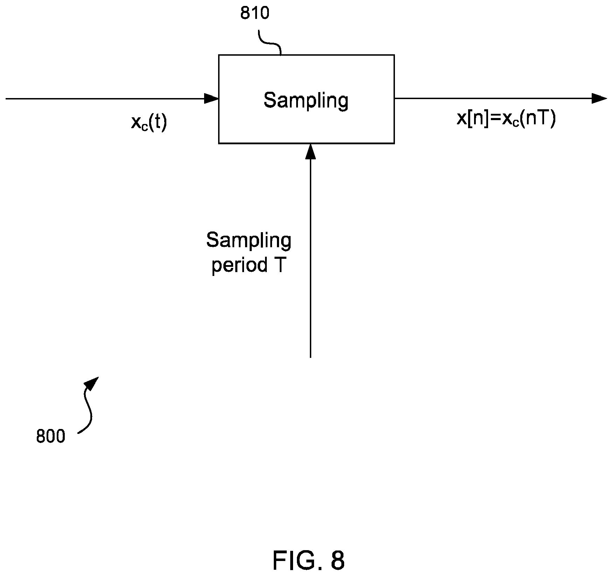

As illustrated in diagram 800 of Fig. 8, at the client device 200 side, an input continuous measured signal $X_c(t)$ of, e.g., a cell/beam c may be sampled by sampling block 810 using a sampling rate $R_s = \frac{1}{T}$ received from the network node device 210, where T represents the sampling period.

At least in some embodiments, the instructions, when executed by the at least one processor 202, may further cause the client device 200 to perform transmitting to the network node device 210 a reduction request for radio signal measurements prior to the receiving of the signal measurement reduction indication.

The instructions, when executed by the at least one processor 202, further cause the client device 200 at least to perform generating a set of reduced radio signal measurements based at least on the received at least one reduction setting for radio signal measurements.

The instructions, when executed by the at least one processor 202, further cause the client device 200 at least to perform transmitting to the network node device 210 a reduced radio signal measurement report comprising the generated set of reduced radio signal measurements.

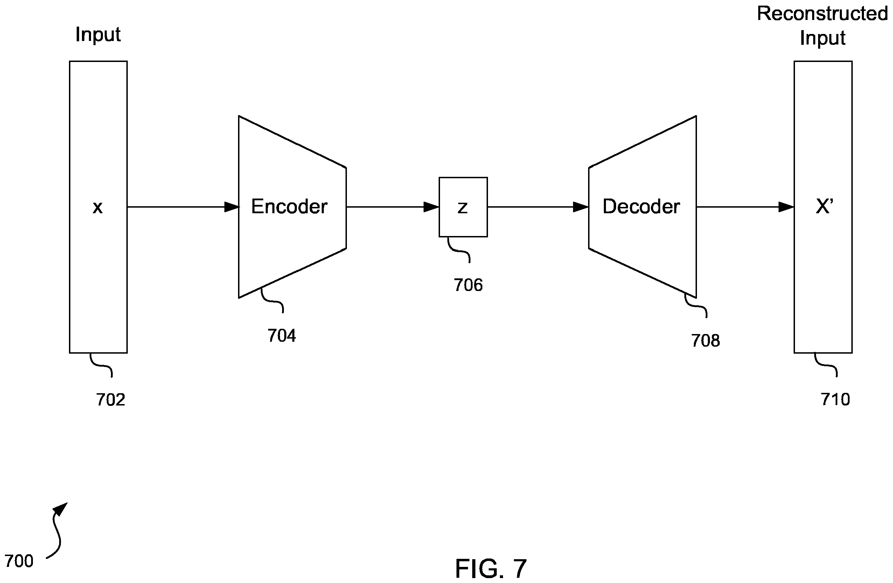

In a first implementation, the generating of the set of reduced radio signal measurements may comprise applying a set of non-reduced radio signal measurements and the received at least one signal measurement reduction setting as input to a first ML model configured to predict the set of reduced radio signal measurements and optionally some related statistics, such as predicted upcoming measurements' mean and variance. For example, the first ML model may comprise an encoder part 704 of an autoencoder 700. Fig. 7 illustrates an example of the autoencoder 700, with an input 702, an encoder 704, a compressed version 706 of input 702, a decoder 708, and a reconstruction 710 of input 702. In other words, in Fig. 7, a code (z) represents a compressed version of input X.

At least in some embodiments of the first implementation, the generation of the set of reduced radio signal measurements may further comprise applying at least one of radio signal strength information and trajectory information as auxiliary input to the first ML model. The radio signal strength may comprise, e.g., reference signal received power (RSRP), reference signal received quality (RSRQ), and/or signal to interference pluse noise rasio (SINR), information.

At least in some embodiments of the first implementation, the first ML model may further be configured to predict mean values and/or variances of upcoming radio signal measurements based on the trajectory information, and the reduced radio signal measurement report may further comprise the predicted mean values and/or variances of the upcoming radio signal measurements. Alternatively, at least in some embodiments of the first implementation, the instructions, when executed by the at least one processor 202, may further cause the client device 200 to perform calculating mean values and/or variances of the set of non-reduced radio signal measurements, and the reduced radio signal measurement report may further comprise the calculated mean values and/ or variances of the set of non-reduced radio signal measurements.

In a second implementation, the generation of the set of reduced radio signal measurements may comprise sampling a set of non-reduced radio signal measurements based on the received at least one signal measurement reduction setting, and the set of reduced radio signal measurements may comprise results of the sampling.

At least in some embodiments of the second implementation, the instructions, when executed by the at least one processor 202, may further cause the client device 200 to perform calculating mean values and/or variances of the set of non-reduced radio signal measurements, and the reduced radio signal measurement report may further comprise the calculated mean values and/or variances of the set of non-reduced radio signal measurements.

Fig. 2B is a block diagram of a network node device 210, in accordance with an example embodiment.

The network node device 210 comprises at least one processor 212 and at least one memory 214 including computer program code. The network node device 210 may also include other elements, such as a transceiver 216 configured to enable the network node device 210 to transmit and/or receive information to/from other devices, as well as other elements not shown in Fig. 2B. In one example, the network node device 210 may use the transceiver 216 to transmit or receive signaling information and data in accordance with at least one cellular communication protocol. The transceiver 216 may be configured to provide at least one wireless radio connection, such as for example a 3GPP mobile broadband connection (e.g., 5G or beyond). The transceiver 216 may comprise, or be configured to be coupled to, at least one antenna to transmit and/or receive radio frequency signals.

Although the network node device 210 is depicted to include only one processor 212, the network node device 210 may include more processors. In an embodiment, the memory 214 is capable of storing instructions, such as an operating system and/or various applications. Furthermore, the memory 214 may include a storage that may be used to store, e.g., at least some of the information and data used in the disclosed embodiments.

Furthermore, the processor 212 is capable of executing the stored instructions. In an embodiment, the processor 212 may be embodied as a multi-core processor, a single core processor, or a combination of one or more multi-core processors and one or more single core processors. For example, the processor 212 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, or the like. In an embodiment, the processor 212 may be configured to execute hard-coded functionality. In an embodiment, the processor 212 is embodied as an executor of software instructions, wherein the instructions may specifically configure the processor 212 to perform the algorithms and/or operations described herein when the instructions are executed.

The memory 214 may be embodied as one or more volatile memory devices, one or more non-volatile memory devices, and/or a combination of one or more volatile memory devices and non-volatile memory devices. For example, the memory 214 may be embodied as semiconductor memories (such as mask ROM, PROM (programmable ROM), EPROM (erasable PROM), flash ROM, RAM (random access memory), etc.).

The network node device 210 may comprise a base station. The base station may include, e.g., a fifth-generation base station (gNB) or any such device providing an air interface for client devices to connect to the wireless network via wireless transmissions.

When executed by the at least one processor 212, instructions stored in the at least one memory 214 cause the network node device 210 at least to perform transmitting, to a client device 200, the reduction indication for reported radio signal measurements indicating at least one reduction setting for reported radio signal measurements.

At least in some embodiments, the instructions, when executed by the at least one processor 212, may further cause the network node device 210 to perform receiving, from the client device 200, the reduction request for radio signal measurements prior to the transmitting of the reduction indication for radio signal measurements.

The instructions, when executed by the at least one processor 212, further cause the network node device 210 at least to perform receiving, from the client device 200, the reduced radio signal measurement report comprising the set of reduced radio signal measurements.

The instructions, when executed by the at least one processor 212, further cause the network node device 210 at least to perform reconstructing the set of non-reduced radio signal measurements based on the received set of reduced radio signal measurements.

In the first implementation, the reconstructing of the set of non-reduced radio signal measurements may comprise applying the received set of reduced radio signal measurements as input to a second (ML) model configured to obtain the set of non-reduced radio signal measurements. For example, the second ML model may comprise a decoder part 708 of the autoencoder 700.

In the second implementation, the reconstructing of the set of non-reduced radio signal measurements may comprise interpolating the set of non-reduced radio signal measurements from the received set of reduced radio signal measurements.

For example, at the network node device 210 side a sampled version $X_c(nT)$ may be reconstructed using a suitable interpolation technique, such as connecting samples using interpolation kernels, sampling and hold (rectangular kernels), linear interpolation (triangular kernels), high order kernels, or ideal kernel (sinc function).

At least in some embodiments, the received reduced radio signal measurement report may further comprise mean values and/or variances of the set of non-reduced radio signal measurements, and the instructions, when executed by the at least one processor 212, may further cause the network node device 210 to perform the reconstructing of the set of non-reduced radio signal measurements further based on the received mean values and/or variances of the set of non-reduced radio signal measurements.

Further features of the network node device 210 directly result from the functionalities and parameters of the client device 200 and thus are not repeated here.

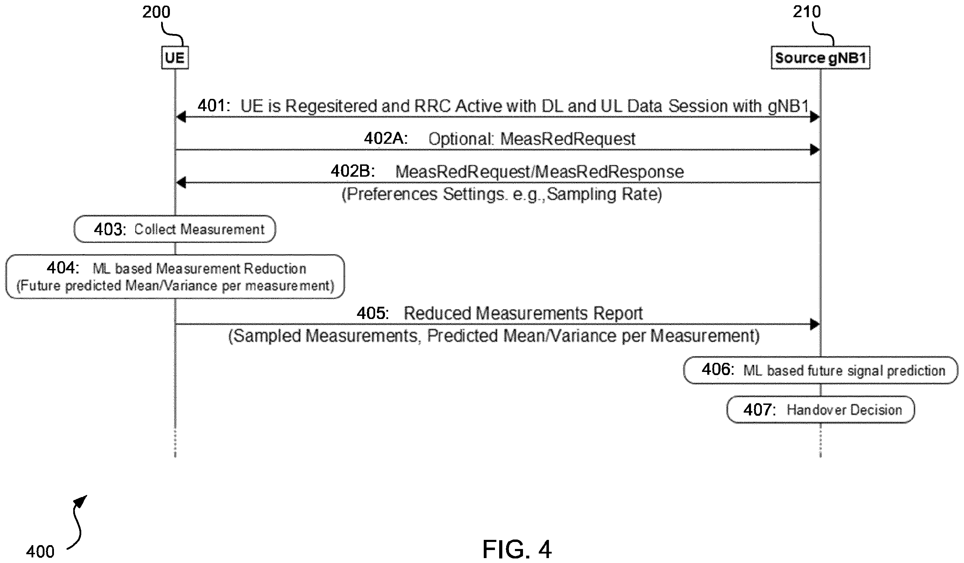

Diagram 400 of Fig. 4 illustrates an example of ML -based future prediction measurement reduction.

At optional operation 401, the client device 200 may be registered with the network node device 210.

At optional operation 402A, the client device 200 may send a measurement reduction request to the network node device 210.

At operation 402B, the network node device 210 may send a measurement reduction response (MeasRedResponse), or alternatively the network node device 210 may initiate a measurement reduction request (MeasRedRequest) upon reception of a request from the UE side. Both may be associated with measurement reduction settings (such as Sampling rate Rs) with the client device 200. For example, the network node device 210 may select the sampling rate based on measurement history and/or experience.

At optional operation 403, the client device 200 may collect radio signal measurements.

At operation 404, upon the MeasRedRequest/MeasRedResponse reception, the client device 200 may use the received settings as a part of input to its ML model, optionally among other inputs (such as RSRP and/or trajectory) to produce (i.e., predict) a reduced version of its radio signal measurements. Furthermore, the client device 200 may predict future mean values / variances of upcoming radio signal measurements based on, e.g., its local trajectory information to help the network node device 210 to reconstruct the original (non-reduced) version of the radio signal measurements from the sampled and reduced size version of the radio signal measurements. Alternatively, the mean values /variances may be calculated from the original version of the radio signal measurements.

At operation 405, the client device 200 may send the reduced measurements report comprising the predicted reduced size version of the radio signal measurements and optionally the predicted future mean values / variances of the upcoming radio signal measurements.

At operation 406, upon receiving the predicted reduced size radio signal measurements and optionally the predicted future / calculated mean values / variances per radio signal measurement, the network node device 210 may reconstruct the original radio signal measurements, e.g., by using its ML model which may take signal levels of the reduced radio signal measurements and optionally the mean values / variances.

At optional operation 4077, the network node device 210 may make a handover decision.

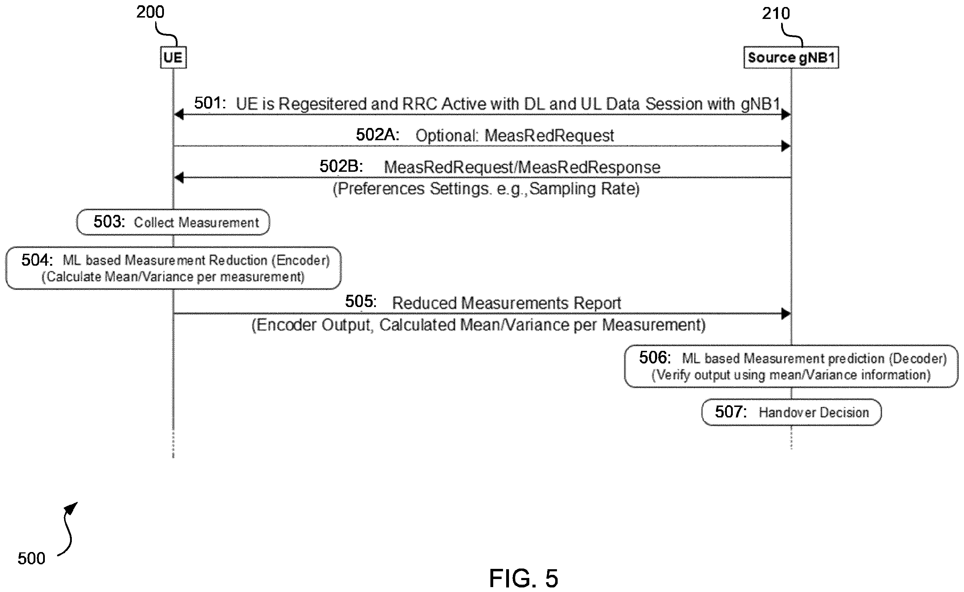

Diagram 500 of Fig. 5 illustrates an example of ML -based autoencoder prediction measurement Reduction. Operations 501 to 507 are substantially similar to those in diagram 400 of Fig. 4 apart from the use of the autoencoder specifically, and thus are not repeated here in detail.

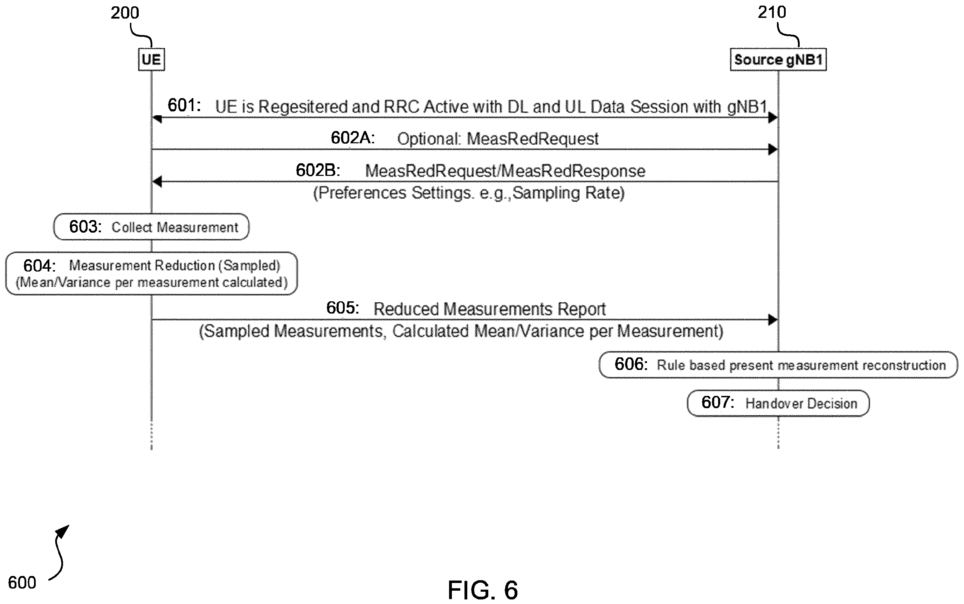

Diagram 600 of Fig. 6 illustrates an example of rule -based measurement Reduction. Operations 601 to 603 and 607 are substantially similar to those in diagram 400 of Fig. 4 and thus are not repeated here in detail.

At operation 604, upon the MeasRedRequest/MeasRedResponse reception, the client device 200 may use the received settings to sample its radio signal measurements and calculate the mean values / variances of the unsampled version of the radio signal measurements to help the network node device 210 to reconstruct the original (non-reduced) version of the radio signal measurements from the sampled and reduced size version of the radio signal measurements.

At operation 605, the client device 200 may send the reduced measurements report comprising the sampled reduced size version of the radio signal measurements and optionally the calculated mean values / variances of the original radio signal measurements.

At operation 606, upon receiving the sampled reduced size radio signal measurements and optionally the calculated mean values / variances per radio signal measurement, the network node device 210 may reconstruct the original radio signal measurements, e.g., by using interpolation, optionally with the help of the mean values / variances.

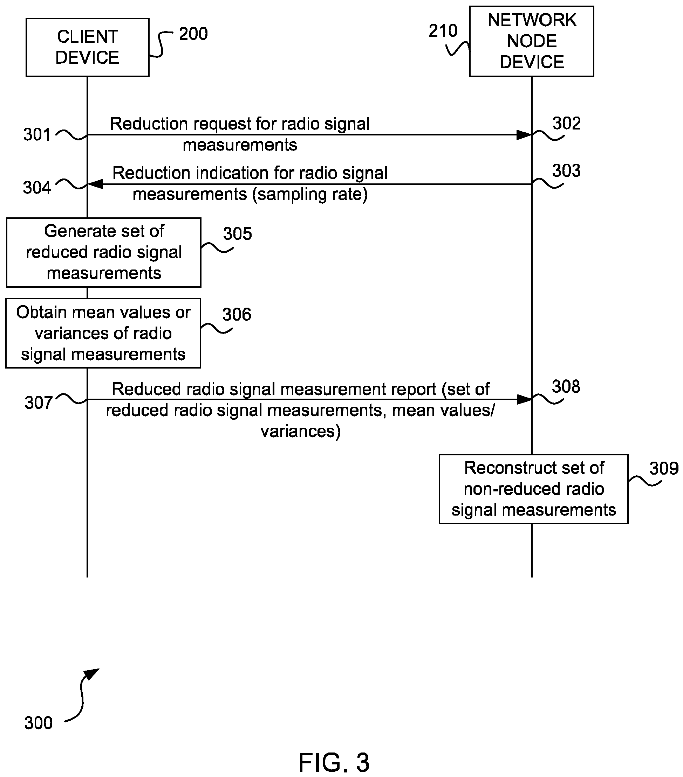

Fig. 3 illustrates an example signalling diagram 300 of a method, in accordance with an example embodiment.

At optional operation 301, the client device 200 may transmit to the network node device 210 the reduction request for radio signal measurements. At optional operation 302, the network node device 210 may receive the reduction request for radio signal measurements.

At operation 303, the network node device 210 transmits to the client device 200 the reduction indication for radio signal measurements indicating at least one reduction setting for radio signal measurements. At operation 304, the client device 200 receives the reduction indication for radio signal measurements.

At operation 305, the client device 200 generates the set of reduced radio signal measurements based at least on the received at least one reduction setting for radio signal measurements.

At optional operation 306, the client device 200 may obtain mean values and/or variances of radio signal measurements. As discussed above in more detail, this may be achieved, e.g., via the first ML model predicting the mean values and/or variances of upcoming radio signal measurements based on the trajectory information, or via the client device 200 calculating the mean values and/or variances of the set of non-reduced radio signal measurements.

At operation 305, the client device 200 transmits to the network node device 210 the reduced radio signal measurement report comprising the generated set of reduced radio signal measurements and optionally the obtained mean values and/or variances of radio signal measurements. At operation 308, the network node device 210 receives the reduced radio signal measurement report.

At operation 309, the network node device 210 reconstructs the set of non-reduced radio signal measurements based on the received set of reduced radio signal measurements, and optionally on the received mean values and/or variances of radio signal measurements.

The method of diagram 300 may be performed by the client device 200 of Fig. 2A and the network node device 210 of Fig. 2B. The operations 301, 304-307 can, for example, be performed by the at least one processor 202 and the at least one memory 204. The operations 302-303, 308-309 can, for example, be performed by the at least one processor 212 and the at least one memory 214. Further features of the method of diagram 300 directly result from the functionalities and parameters of the client device 200 and the network node device 210, and thus are not repeated here. The method of diagram 300 can be performed by computer program(s).

The client device 200 may comprise means for performing at least one method described herein. In one example, the means may comprise the at least one processor 202, and the at least one memory 204 storing instructions that, when executed by the at least one processor, cause the client device 200 to perform the method.

The network node device 210 may comprise means for performing at least one method described herein. In one example, the means may comprise the at least one processor 212, and the at least one memory 214 storing instructions that, when executed by the at least one processor, cause the network node device 210 to perform the method.

The functionality described herein can be performed, at least in part, by one or more computer program product components such as software components. According to an embodiment, the client device 200 and/or network node device 210 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), and Graphics Processing Units (GPUs).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

**Claims**

1. A client device (200), comprising:

   at least one processor (202); and
   at least one memory (204) storing instructions that, when executed by the at least one processor (202), cause the client device (200) at least to perform:

      receiving, from a network node device (210), a reduction indication for radio signal measurements indicating at least one reduction setting for radio signal measurements;
      generating a set of reduced radio signal measurements based at least on the received at least one reduction setting for radio signal measurements; and
      transmitting, to the network node device (210), a reduced radio signal measurement report comprising the generated set of reduced radio signal measurements.

2. The client device (200) according to claim 1, wherein the generating of the set of reduced radio signal measurements comprises applying a set of non-reduced radio signal measurements and the received at least one signal measurement reduction setting as input to a first machine learning, ML, model configured to predict the set of reduced radio signal measurements.

3. The client device (200) according to claim 2, wherein the generating of the set of reduced radio signal measurements further comprises applying at least one of radio signal strength information or trajectory information as auxiliary input to the first ML model.

4. The client device (200) according to claim 3, wherein:

   the first ML model is further configured to predict at least one of mean values or variances of upcoming radio signal measurements based on the trajectory information, and the reduced radio signal measurement report further comprises the predicted at least one of mean values or variances of the upcoming radio signal measurements; or
   the instructions, when executed by the at least one processor (202), further cause the client device (200) to perform calculating at least one of mean values or variances of the set of non-reduced radio signal measurements, and the reduced radio signal measurement report further comprises the calculated at least one of mean values or variances of the set of non-reduced radio signal measurements.

5. The client device (200) according to any of claims 2 to 4, wherein the first ML model comprises an encoder part (704) of an autoencoder (700).

6. The client device (200) according to claim 1, wherein the generating of the set of reduced radio signal measurements comprises sampling a set of non-reduced radio signal measurements based on the received at least one signal measurement reduction setting, and the set of reduced radio signal measurements comprises results of the sampling.

7. The client device (200) according to claim 6, wherein the instructions, when executed by the at least one processor (202), further cause the client device (200) to perform calculating at least one of mean values or variances of the set of non-reduced radio signal measurements, and the reduced radio signal measurement report further comprises the calculated at least one of mean values or variances of the set of non-reduced radio signal measurements.

8. The client device (200) according to any of claims 1 to 7, wherein the instructions, when executed by the at least one processor (202), further cause the client device (200) to perform transmitting, to the network node device (210), a reduction request for radio signal measurements prior to the receiving of the signal measurement reduction indication.

9. The client device (200) according to any of claims 1 to 8, wherein the at least one reduction setting for radio signal measurements comprises a sampling rate.

10. A network node device (210), comprising:

at least one processor (212); and
at least one memory (214) storing instructions that, when executed by the at least one processor (212), cause the network node device (210) at least to perform:

transmitting, to a client device (200), a reduction indication for radio signal measurements indicating at least one reduction setting for radio signal measurements;
receiving, from the client device (200), a reduced radio signal measurement report comprising a set of reduced radio signal measurements; and
reconstructing a set of non-reduced radio signal measurements based on the received set of reduced radio signal measurements.

11. The network node device (210) according to claim 10, wherein the reconstructing of the set of non-reduced radio signal measurements comprises applying the received set of reduced radio signal measurements as input to a second machine learning, ML, model configured to obtain the set of non-reduced radio signal measurements.

12. The network node device (210) according to claim 11, wherein the second ML model comprises a decoder part (708) of an autoencoder (700).

13. The network node device (210) according to claim 10, wherein the reconstructing of the set of non-reduced radio signal measurements comprises interpolating the set of non-reduced radio signal measurements from the received set of reduced radio signal measurements.

14. The network node device (210) according to any of claim 10 to 13, wherein the received reduced radio signal measurement report further comprises at least one of mean values or variances of the set of non-reduced radio signal measurements, and the instructions, when executed by the at least one processor (212), further cause the network node device (210) to perform the reconstructing of the set of non-reduced radio signal measurements further based on the received at least one of mean values or variances of the set of non-reduced radio signal measurements.

15. The network node device (210) according to any of claim 10 to 14, wherein the instructions, when executed by the at least one processor (212), further cause the network node device (210) to perform receiving, from the client device (200), a reduction request for radio signal measurements prior to the transmitting of the reduction indication for radio signal measurements.

FIG. 1

200

CLIENT DEVICE

202

PROCESSOR

204

MEMORY

206

TRANSCEIVER

FIG. 2A

210

NETWORK NODE
DEVICE

212

PROCESSOR

214

MEMORY

216

TRANSCEIVER

FIG. 2B

**CLIENT DEVICE** 200

**NETWORK NODE DEVICE** 210

301 → Reduction request for radio signal measurements → 302

304 ← Reduction indication for radio signal measurements (sampling rate) ← 303

Generate set of reduced radio signal measurements 305

Obtain mean values or variances of radio signal measurements 306

307 → Reduced radio signal measurement report (set of reduced radio signal measurements, mean values/variances) → 308

Reconstruct set of non-reduced radio signal measurements 309

300

FIG. 3

FIG. 4

EP 4 376 476 A1

FIG. 5

EP 4 376 476 A1

```
  200                                                         210
    ┌────┐                                          ┌──────────────┐
    │ UE │                                          │ Source gNB1  │
    └────┘                                          └──────────────┘
      │                                                    │
      │◄── 601:  UE is Regesitered and RRC Active with DL and UL Data Session with gNB1 ──┤
      │                                                    │
      ├── 602A:    Optional: MeasRedRequest ──────────────►│
      │                                                    │
      │◄── 602B:   MeasRedRequest/MeasRedResponse ─────────┤
      │         (Preferences Settings. e.g.,Sampling Rate) │
      │                                                    │
  ┌───────────────────────────┐                            │
  │ 603:  Collect Measurement │                            │
  └───────────────────────────┘                            │
  ┌────────────────────────────────────────┐               │
  │ 604:   Measurement Reduction (Sampled)  │               │
  │ (Mean/Variance per measurement calculated)│             │
  └────────────────────────────────────────┘               │
      │                                                    │
      ├── 605:   Reduced Measurements Report ─────────────►│
      │ (Sampled Measurements, Calculated Mean/Variance per Measurement)│
      │                                                    │
      │          ┌──────────────────────────────────────────────────┐
      │          │ 606:  Rule based present measurement reconstruction│
      │          └──────────────────────────────────────────────────┘
      │                       ┌──────────────────────────────┐
      │                       │ 607:  Handover Decision       │
      │                       └──────────────────────────────┘
      ┊                                                    ┊
```

600

FIG. 6

FIG. 7

FIG. 8

Europäisches
Patentamt

European
Patent Office

Office européen
des brevets

# EUROPEAN SEARCH REPORT

Application Number

EP 23 20 2674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PANASONIC: "Discussion on AI/ML for CSI feedback enhancement", 3GPP DRAFT; R1-2204659, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20220509 - 20220520 29 April 2022 (2022-04-29), XP052153625, Retrieved from the Internet: URL:https://ftp.3gpp.org/tsg_ran/WG1_RL1/T SGR1_109-e/Docs/R1-2204659.zip R1-2204659.docx [retrieved on 2022-04-29] | 1-3,5, 10,12 | INV. H04W24/10 H04W24/02 |
| Y | * the whole document * | 6,9 | |
| A | | 4,7,8,15 | |
| | ----- | | |
| Y | FUJITSU: "Evaluation on AI/ML for CSI feedback enhancement", 3GPP DRAFT; R1-2205076, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20220509 - 20220520 29 April 2022 (2022-04-29), XP052191735, Retrieved from the Internet: URL:https://ftp.3gpp.org/tsg_ran/WG1_RL1/T SGR1_109-e/Docs/R1-2205076.zip R1-2205076 Evaluation_on_AI_ML_for_CSI_feedback_enhan cement.docx [retrieved on 2022-04-29] | 6,9 | **TECHNICAL FIELDS SEARCHED (IPC)** <br><br> H04W |
| A | * the whole document * | 1-5,7,8, 11-15 | |
| | ----- | | |
| | -/-- | | |

The present search report has been drawn up for all claims

| Place of search | Date of completion of the search | Examiner |
|---|---|---|
| Munich | 22 April 2024 | Delucchi, Cecilia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 20 2674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NEC: "Discussion on AI/ML for CSI feedback enhancement", 3GPP DRAFT; R1-2203939, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20220509 – 20220520 29 April 2022 (2022-04-29), XP052153273, Retrieved from the Internet: URL:https://ftp.3gpp.org/tsg_ran/WG1_RL1/TSGR1_109-e/Docs/R1-2203939.zip R1-2203939 AI ML for CSI feedback enhancements.docx [retrieved on 2022-04-29] ----- | 1-15 | |
| A | US 2022/338189 A1 (MADADI PRANAV [US] ET AL) 20 October 2022 (2022-10-20) * abstract * * paragraphs [0006] – [0012], [0070] – [0073], [0142] – [0145]; figures 4,6 * ----- | 1-15 | |

**TECHNICAL FIELDS SEARCHED (IPC)**

The present search report has been drawn up for all claims

| Place of search | Date of completion of the search | Examiner |
|---|---|---|
| Munich | 22 April 2024 | Delucchi, Cecilia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 20 2674

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2024

| Patent document cited in search report | Publication date | Patent family member(s) | Publication date |
|---|---|---|---|
| US 2022338189 A1 | 20-10-2022 | CN 117044125 A | 10-11-2023 |
| | | EP 4302424 A1 | 10-01-2024 |
| | | KR 20230169948 A | 18-12-2023 |
| | | US 2022338189 A1 | 20-10-2022 |
| | | WO 2022220642 A1 | 20-10-2022 |

EPO FORM P0459

For more details about this annex : see Official Journal of the European Patent Office, No. 12/82